Europäisches Patentamt

European Patent Office

Office européen des brevets

(19)

(11) Publication number: **0 049 139**
**A1**

(12) # EUROPEAN PATENT APPLICATION

(21) Application number: **81304453.4**

(22) Date of filing: **28.09.81**

(51) Int. Cl.³: **H 01 M 6/16**

(30) Priority: **29.09.80 US 192002**

(43) Date of publication of application: **07.04.82**
**Bulletin 82/14**

(84) Designated Contracting States: **BE CH DE FR GB LI**

(71) Applicant: **UNION CARBIDE CORPORATION, 270, Park Avenue, New York, N.Y. 10017 (US)**

(72) Inventor: **Clark, Milton Bedford, 6603 Greenbriar Drive, Brecksville (44141) Ohio (US)**

(74) Representative: **McCall, John Douglas et al, W.P. THOMPSON & CO. Coopers Building Church Street, Liverpool L1 3AB (GB)**

(54) **Nonaqueous cell.**

(57) There is disclosed a nonaqueous cell comprising an active metal anode such as lithium, an iron compound cathode such as $FeS_2$ and a liquid organic electrolyte comprising lithium trifluoromethane sulfonate ($LiCF_3SO_3$) dissolved in propylene carbonate (PC) and dimethoxyethane (DME).

EP 0 049 139 A1

1.

DESCRIPTION

NONAQUEOUS CELL.

The invention relates to a nonaqueous cell. ·

The development of high energy battery systems requires the compatibility of an electrolyte possessing desirable electrochemical properties with highly reactive anode materials, such as lithium, sodium, and the like and the efficient use of high energy density cathode materials such as iron compounds. The use of aqueous electrolytes is precluded in these systems since the anode materials are sufficiently active to react with water chemically. It has, therefore, been necessary, in order to realize the high energy density obtainable through use of these highly reactive anodes and high energy density cathodes, to turn to the investigation of nonaqueous electrolyte systems and more particularly to nonaqueous organic electrolyte systems.

The term "nonaqueous organic electrolyte" in the prior art refers to an electrolyte which is composed of a solute, for example, a salt or complex salt of Group 1-A, Group II-A or Group III-A elements of the Periodic Table, dissolved in an appropriate nonaqueous organic solvent. Conventional solvents include propylene carbonate, ethylene carbonate or $\gamma$-butyrolactone.

A multitude of solutes is known and recommended for use but the selection of a suitable solvent has been particularly troublesome since many of those solvents which are used to prepare electrolytes sufficiently conductive to permit effective ion migration through the solution are reactive with the highly active anodes mentioned above. Most investigators in this area, in search of suitable solvents, have concentrated on aliphatic and aromatic nitrogen- and oxygen-containing compound with some attention given to organic sulfur-, phosphorus- and arsenic-containing compounds. The results of this search have not been entirely satisfactory since many of the solvents investigated still could not be used effectively with high energy density cathode materials, such as ferrous disulfide ($FeS_2$), and were sufficiently corrosive to lithium anodes to prevent efficient performance over any length of time.

U. S. Patent 3,778,310 discloses the use of halides, oxides or sulfides of, for example, Fe (FeS, $FeS_2$) as cathodes in ether-based electrolytes. U. S. Patent 3,775,182 discloses iron sulfides as one group of cathode materials for use in solvent systems containing a trihydrocarbyl carbamate solvent component. Japanese published unexamined application 79/137,631 discloses an Li/FeS cell having a PC-DME-$LiClO_4$ electrolyte solution.

Propylene carbonate and dimethoxyethane have been employed as solvents for a wide range of solutes as disclosed in U. S. Patent 4,158,723. Specifically, this patent discloses an Li/PbO cell containing $Bi_2O_3$, $Sb_2O_3$ or $SnO_2$ additive in the PbO cathode and an electrolyte of a mixture of an ether (e.g., dimethoxyethane) and an ester (e.g., propylene carbonate) with a solute such as lithium trifluoromethane sulfonate.

Although ferrous disulfide has been mentioned as a cathode material for certain cell systems, it is not

3.

always possible to predict whether it would effectively and efficiently function as a cathode in other systems. Thus while the theoretical energy, i.e., the electrical energy potentially available from a selected anode-cathode couple, is relatively easy to calculate, there is a need to choose a nonaqueous electrolyte for a couple that permits the actual energy produced by an assembled battery to approach the theoretical energy. The problem usually encountered is that it is practically impossible to predict in advance how well, if at all, a nonaqueous electrolyte will function with a selected couple. Thus a cell must be considered as a unit having three parts: a cathode, an anode, and an electrolyte, and it is to be understood that the parts of one cell are not predictably interchangeable with parts of another cell to produce an efficient and workable cell.

The invention provides a novel high energy density nonaqueous cell comprising a highly active metal anode, an iron sulfur compound cathode such as $FeS_2$ and a liquid organic electrolyte comprising lithium trifluoromethane sulfonate dissolved in propylene carbonate and dimethoxyethane.

The cell of the invention may have one or more of the following properties:

(i) excellent cathode utilization at room temperature conditions,

(ii) good pulse discharge capabilities, and

(iii) excellent stability against electrolyte decomposition.

4.

Preferably, the iron sulfur compound should be mixed with a conductive agent such as graphite, carbon or the like and a binder such as Teflon (trademark for polytetrafluoroethylene), ethylene acrylic acid copolymer or the like to produce a cohesive cathode. If desired, a small amount of the electrolyte can be incorporated into the cathode mix.

The specific electrolyte of this invention, $PC-DME-LiCF_3SO_3$, has been found to be an extremely stable electrolyte for lithium cells that permits excellent $FeS_2$ utilization. Although there are hundreds of electrolyte solutions for use in nonaqueous cell systems, many will not provide efficient cathode utilization and many may not efficiently function with $FeS_2$-containing cathodes.

The ratio of propylene carbonate to dimethoxyethane based on the solvent volume can vary from about 80:20 to 20:80 and is preferably about 50:50. The lithium trifluoromethane sulfonate can vary from about 0.5 molar up to its saturation in the electrolyte solution and preferably is about 1 molar concentration. Generally, the conductivity should be at least $10^{-3}$ $ohm^{-1}$ $cm^{-1}$.

Highly active metal anodes suitable for this invention include lithium (Li), potassium (K), sodium (Na), calcium (Ca), magnesium (Mg), aluminum (Al), and their alloys. Of these active metals, lithium would be preferred because in addition to being a ductile, soft metal that can easily be assembled in a cell, it possesses the highest energy-to-weight ratio of the group of suitable anode metals.

5.

## EXAMPLE I

Fifteen milliliters of an electrolyte solution were prepared from 1M $LiCF_3SO_3$ in a 50:50 volume ratio of propylene carbonate and dimethoxyethane. Samples of the electrolyte were stored for 31 days and revealed no change in color. A lithium strip was placed in some of the electrolyte samples and after 31 days showed no color variation in the electrolyte solution and only a very slight discoloration of the lithium strip. $FeS_2$ was placed in some of the electrolyte samples and after 31 days the electrolyte solution was observed to have only a very slight color change and/or a cloudy appearance. In some additional samples of the electrolyte, a lithium strip and $FeS_2$ were placed. After 31 days this electrolyte solution exhibited no change in color and only a very slight discoloration of the lithium strip. These tests clearly indicated the stability of the electrolyte solution when used in conjunction with a lithium anode and an $FeS_2$ cathode.

## EXAMPLE II

Two test cells were constructed each using a cathode consisting of 0.6 gram mix containing 80% by weight of $FeS_2$, 10% by weight graphite, 3% by weight acetylene black and 7% by weight of a latex binder, a lithium anode (0.2 gram), a separator of nonwoven polypropylene, and about 2.0 ml of an electrolyte consisting of about 1M $LiCF_3SO_3$ in a 50:50 volume ratio of propylene carbonate and dimethoxyethane. Each cell

6.

was continuously discharged across a 3K-ohm load and, at certain intervals, the cell was pulse-discharged across a 125-ohm load for two seconds. The results observed are shown in Table 1 along with the per cent $FeS_2$ efficiency to a 1.0 volt cutoff. The data show the relatively constant pulse voltages obtained using the cell of this invention even after 33 days. The per cent $FeS_2$ efficiency to 1.0 volt cutoff which was close to but not exceeding 100% shows the stability of the electrolyte solution in the cell system, i.e., the components of the electrolyte solution did not effectively undergo electrochemical reduction.

## TABLE 1

| Sample | % Efficiency | 4 | 6 | 12 | 19 | 26 | 33 | 40 |
|---|---|---|---|---|---|---|---|---|
| | | | | Days* | | | | |
| A | 88 | 0.94 V | 1.03 V | 1.05 V | 1.07 V | 1.05 V | 1.00 V | |
| B | 90 | 0.90 V | 0.97 V | 0.96 V | 0.99 V | 1.02 V | 0.92 V | 0.76 V |

*Days the cell was continuously discharged across a 3K-ohm load and the voltage readings shown are for the pulse voltages taken across a 125-ohm load (in parallel with the 3K-ohm load) for 2 seconds.

7.

8.

EXAMPLE III

Two test cells were constructed as in Example II except that polytetrafluoroethylene was employed as the binder for the cathode mix. The cells were subjected to the same type test and the data obtained are shown in Table 2. Again, the data show the relatively constant pulse voltages obtainable using the cell of this invention and the stability of the electrolyte solution in the cell.

TABLE 2

| Sample | % Efficiency | Days* | | | | |
|---|---|---|---|---|---|---|
| | | 1 | 8 | 15 | 22 | 29 |
| A | 93 % | 1.03 V | 1.19 V | 1.12 V | 1.17 V | 1.14 V |
| B | 91% | 1.01 V | 1.18 V | 1.12 V | 1.18 V | 1.16 V |

*Days the cell was continuously discharged across a 3K-ohm load and the voltage readings shown are for the pulse voltages taken across a 125-ohm load (in parallel with the 3K-ohm load) for 2 seconds.

9.

<u>CLAIMS</u>

1. A nonaqueous cell characterised by comprising a metal anode, an iron sulfur-containing cathode and a liquid organic electrolyte comprising lithium trifluoromethane sulfonate dissolved in propylene carbonate and dimethoxyethane.

2. A nonaqueous cell as claimed in claim 1, characterised in that the iron sulfur compound is $FeS_2$.

3. A nonaqueous cell as claimed in claim 1 or 2, characterised in that the volume ratio of propylene carbonate to dimethoxyethane is between about 80:20 and 20:80.

4. A non-aqueous cell as claimed in any one of the preceding claims, characterised in that the volume ratio of propylene carbonate to dimethoxyethane is about 50:50.

5. A nonaquous cell as claimed in any one of the preceding claims, characterised in that the concentration of the lithium trifluoromethane sulfonate in the liquid organic electrolyte varies from about 0.5 molar up to its saturation in the liquid organic electrolyte.

6. A nonaqueous cell as claimed in any one of the preceding claims, characterised in that the concentration of the lithium trifluoromethane sulfunate in the liquid organic electrolyte is about 1 molar.

7. A nonaqueous cell as claimed in any one of the preceding claims, wherein the cathode comprises $FeS_2$, a conductive agent and a binder.

8. A nonaqueous cell as claimed in claim 7, characterised in that the conductive agent is carbon or graphite and the binder is polytetrafluoroethylene or ethylene acrylic acid polymer.

9. A nonaqueous cell as claimed in any one of the preceding claims, characterised in that said metal anode is selected from the group consisting of lithium, potassium, sodium, calcium, magnesium, aluminium and alloys thereof.

European Patent Office

**EUROPEAN SEARCH REPORT**

0049139

Application number

EP 81 30 4453

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | FR - A - 2 342 561 (E.I. DU PONT DE NEMOURS)<br><br>* Page 3, lines 10-30; page 4, lines 5,6; page 12; claims * | 1,9 | H 01 M 6/16 |
| | -- | | |
| | US - A - 4 129 686 (MITCHELL J. KADUBOSKI)<br><br>* Column 3, lines 50-61; column 4, lines 5-9; 45-56; column 5, lines 53-63; column 9, examples * | 1,2,9 | |
| | -- | | TECHNICAL FIELDS SEARCHED (Int.Cl. ³) |
| PE | EP - A - 0 030 868 (E.S.B.)<br><br>* Abstract; page 2, lines 6-34; page 3, lines 1-9 * | 1-5,9 | H 01 M  6/16<br>10/40 |
| | -- | | |
| P | PATENTS ABSTRACTS OF JAPAN, vol. 5, no. 15(E-43)(687), 29th January 1981,<br><br>& JP - A - 55 144 663 (SANYO DENKI K.K., 11-11-1980<br><br>* Abstract * | 1,4-6,9 | |
| | -- | | CATEGORY OF CITED DOCUMENTS |
| A | FR - A - 2 378 361 (S.A.F.T.) | | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| A | US - A - 4 223 079 (NEHEMIAH MARGALIT)<br><br>------ | | |
| | | | &: member of the same patent family, corresponding document |

| The present search report has been drawn up for all claims | | | |
|---|---|---|---|
| Place of search | Date of completion of the search | Examiner | |
| The Hague | 20-01-1982 | DE VOS | |

EPO Form 1503.1  06.78